# EUROPÄISCHE PATENTSCHRIFT

(11) **EP 1 752 277 B1**
(45) Veröffentlichungstag und Bekanntmachung des Hinweises auf die Patenterteilung: **05.10.2011**
(21) Anmeldenummer: 06115420.9
(22) Anmeldetag: 14.06.2006
(51) Int. Cl.: B29C 73/16

(54) **Mittel zum provisorischen Abdichten von aufblasbaren oder aufpumpbaren Gegenständen**
Means for provisional sealing of inflattable articles
Moyens d'obturation provisoires pour objets gonflables

(30) Priorität: 12.07.2005 DE 102005032936
(43) Veröffentlichungstag der Anmeldung: 14.02.2007
(73) Patentinhaber: Continental Reifen Deutschland GmbH, 30165 Hannover (DE)
(72) Erfinder: Schunack, Michael, 30161, Hannover (DE); Lacayo-Pineda, Jorge, 31535, Neustadt (DE)
(74) Vertreter: Finger, Karsten

(56) Entgegenhaltungen:
- DE-A1- 19 753 630
- US-A- 1 960 252

## Beschreibung

Die Erfindung betrifft ein Mittel zum provisorischen Abdichten von aufblasbaren oder aufpumpbaren Gegenständen, insbesondere von Fahrzeugluftreifen, enthaltend zumindest einen Kautschuklatex.

Beim Überfahren von spitzen Gegenständen kann ein Fahrzeugluftreifen Schäden in Form von Rissen oder Löchern erleiden, die zum Luftdruckverlust im Reifen führen. Um solche Schäden zumindest provisorisch, d. h. für eine gewisse Zeitdauer, möglichst sicher abzudichten bis der Fahrzeugluftreifen ausgetauscht werden kann, sind Abdichtmittel bekannt, die nach dem Herausschrauben des Ventileinsatzes oder direkt über das Ventil in den Reifen z. B. mit Hilfe einer Vorrichtung mit Druckquelle und Abdichtmittel eingebracht werden.

Abdichtmittel gemäß dem Oberbegriff des Anspruchs 1, die Kautschuklatex enthalten, sind z. B. aus der DE 198 44 177 A1, der DE 197 53 630 A1 und der EP 0 753 420 B1 bekannt. Bei dem in diesen Schriften verwendeten Kautschuklatex handelt es sich um Naturkautschuklatex aus der tropischen Kautschukpflanze *Hevea brasiliensis.* Naturkautschuklatex aus *Hevea brasiliensis,* der ohne weitere spezielle Behandlung eingesetzt wird, ist allerdings als sensibilisierend eingestuft durch seinen Gehalt an allergen wirkenden Proteinen. Produkte, die diesen Naturkautschuklatex enthalten, sind dementsprechend als reizend, entsprechend Gefahrstoffverordnung, zu kennzeichnen.

Es ist aus der EP 0 846 552 B 1 bekannt, als Alternative zu herkömmlichen Naturkautschuklatex aus *Hevea brasiliensis* in Reifendichtmitteln deproteinierten Naturkautschuklatex einzusetzen. Bei diesem Naturkautschuklatex wird beim Latex nach der Gewinnung aus der Pflanze *Hevea brasiliensis* durch spezielle Verfahren der Proteingehalt reduziert und auf diese Weise das allergene Potenzial verringert. Da die Proteine aber nicht vollständig entfernt werden können, verbleibt ein allergenes Potenzial.

Es ist auch bekannt, für Mittel zum provisorischen Abdichten von aufblasbaren oder aufpumpbaren Gegenständen synthetische Latices zu verwenden. Es hat sich allerdings herausgestellt, dass derartige Mittel in der Regel eine schlechtere Dichtwirkung zeigen als solche auf der Basis von Naturkautschuklatex.

Der Erfindung liegt die Aufgabe zu Grunde, ein Mittel zum provisorischen Abdichten von aufblasbaren oder aufpumpbaren Gegenständen, insbesondere von Fahrzeugluftreifen bereitzustellen, das sicher in seiner Abdichtwirkung ist und keine sensibilisierenden Eigenschaften, wie sie von auf Naturkautschuk aus *Hevea brasiliensis* basierenden Abdichtmitteln bekannt sind, aufweist.

Gelöst wird diese Aufgabe erfindungsgemäß durch ein Mittel, welches als Kautschuklatex Guayule-Latex enthält.

Guayule-Latex wird aus dem Guayulestrauch *(Parthenium argentatum*) nach Rodung, Trocknung, und Zerkleinerung der Zweige durch Flotation gewonnen. Er zeichnet sich durch gleiche oder sehr ähnliche Eigenschaften wie der Latex aus *Hevea brasiliensis* aus, hat aber einen von Natur aus geringeren Proteingehalt (verglichen mit Latex aus *Hevea brasiliensis*) und ist darüber hinaus frei von Proteinen des Typs, die eine Typ I Latexallergie auslösen. Das Molekulargewicht entspricht in etwa dem des Latex aus *Hevea brasiliensis.* Die im Guayule-Latex vorhandenen Proteine treten nicht in Kreuzreaktion mit den menschlichen Antikörpern. Guayule-Latex kann z. B. von der Firma YULEX Corporation, USA, unter dem Namen Guayule Natural Rubber Latex™ erhalten werden.

Dichtmittel, die auf Guayule-Latex basieren, dichten sicher die in aufblasbaren Gegenständen auftretenden Löcher ab und werden als nicht sensibilisierend - weil nicht allergen - eingestuft. Dichtmittel mit Guayule-Latex müssen aufgrund dieses Inhaltsstoffes nicht besonders gekennzeichnet werden.

Gemäß einer vorteilhaften Weiterbildung der Erfindung weist der für das Abdichtmittel verwendete Guayule-Latex einen Feststoffanteil von 50 bis 75 Gew.-% auf und wird bei der Herstellung des Mittels in einer Menge von 1 bis 90 Gew.-%, bezogen auf das Gesamtgewicht des Mittels zum Abdichten, eingesetzt. Dieser Latex lässt sich gut zum Abdichtmittel verarbeiten und gewährleistet eine gute Pump- und Einspritzbarkeit des Abdichtmittels in den abzudichtenden Gegenstand bei gleichzeitig guter Dichtwirkung.

Zumindest ein Klebharz ist im Abdichtmittel enthalten, es können auch mehrere Klebharze im Gemisch verwendet werden, wobei die Harze bevorzugt als eine 45 bis 60 Gew.-%ige, wässrige Dispersion (Emulsion) in einer Menge von 1 bis 50 Gew.%, bezogen auf das Gesamtgewicht des Mittels zum Abdichten, eingesetzt werden. Als Klebharze können natürliche oder synthetische Harze, wie Kohlenwasserstoffharze, eingesetzt werden, die als Klebrigmacher wirken. Bevorzugt sind die Klebharze ausgewählt aus der Gruppe bestehend aus Kolophoniumharzen und deren Estern, Terpen-Phenol-Harzen, Alkin-Phenol-Harzen, Phenol-Harzen und Cumaron-Inden-Harzen. Abdichtmittel mit diesen Klebharzen zeigen eine besonders hohe Klebfestigkeit mit guter Abdichtwirkung und haben einen positiven Einfluss auf die Kompatibilisierung mit anderen Komponenten des Abdichtmittels.

Das Kolophonium, das aus dem Baumharz verschiedener Nadelhölzer gewonnen werden kann, besteht im Wesentlichen aus einem Gemisch aus Harzsäuren und Terpenen. Die Veresterung der entsprechenden Bestandteile des Kolophoniums erfolgt auf herkömmliche Art und Weise. So ist es denkbar, das Kolophonium z. B. mit Alkoholen bzw. Alkoholgemischen umzusetzen. Auch ist es möglich, dass aus dem Kolophonium gewisse Bestandteile, wie z. B. die Abietinsäure, Dehydroabietinsäure, Tetrahydroabietinsäure, Dihydroabietinsäure, deren Isomere und/oder Mischungen hieraus, gewonnen werden und diese Bestandteile einzeln oder gemeinsam mit Alkoholen oder Alkoholgemischen umgesetzt werden. Bevorzugt werden als Alkohole z. B. Methanol, Ethanol, Propan-1,2,3-triol und/oder Pentaerithrithol verwendet.

Terpen-Phenol-Harze sind solche Harze, die durch Säure-katalysierte Addition von Phenolen an Terpene hergestellt werden.

Als Alkin-Phenol-Harz können Harze verwendet werden, die als Alkin z. B. Ethin und als Phenolkomponente z. B. Butylphenol oder Novolacke aus Formaldehyd und z. B. p-tert. Butylphenol (oder p-Diisobutylphenol) enthalten.

Cumaron-Inden-Harze fallen als Copolymere bei der Polymerisation der im Leichtöl des Steinkohlenteers enthaltenen ungesättigten Verbindungen an.

Das Abdichtmittel kann für eine Verwendbarkeit auch bei tiefen Temperaturen, z. B. für einen Einsatz in der kalten Jahreszeit oder in polaren Regionen, zumindest ein Gefrierschutzmittel enthalten. Gefrierschutzmittel, auch Frostschutzmittel genannt, sind Substanzen, die zur Senkung des Gefrierpunktes Verwendung finden.

Bevorzugt beträgt der Anteil an Gefrierschutzmittel bzw. -mitteln 1 bis 40 Gew.-%, vorzugsweise 15 bis Gew.-%, 35 Gew.-%, bezogen auf das Gesamtgewicht des Abdichtmittels, um eine ausreichende Kältetauglichkeit des Abdichtmittels zu gewährleisten.

Bei den Gefrierschutzmitteln handelt es sich in der Regel um hochsiedende, wasserlösliche, schwer entflammbare organ. Flüssigkeiten wie Diole mit vicinalen OH-Gruppen und einer Kohlenstoffkettenlänge von bis zu 8 Atomen. Durch geeignete Kombination verschiedener Diole kann der gewünschte Gefrierschutz je nach Einsatzgebiet des Reifens eingestellt werden. Vorzugsweise werden das oder ― beim Einsatz von Gemischen ― die Gefrierschutzmittel ausgewählt aus der Gruppe bestehend aus Ethylenglykol, Propylenglykol und Dipropylenglykol.

Das Abdichtmittel kann weitere übliche Zusatzstoffe in üblichen Mengen enthalten. So können dem Abdichtmittel Alterungsschutz- bzw. Konservierungsmittel zur Sicherung der Einsatzbereitschaft des Abdichtmittels bei Lagerung zugesetzt werden. Ferner kann das Abdichtmittel Dispergiermittel, Emulgiermittel, Schaumstabilisatoren, Tenside und pH-Regulatoren enthalten.

Es ist auch möglich, dem Abdichtmittel Füllstoffe zuzusetzen, die zum Abdichten insbesondere von größeren Löchern beitragen. Als Füllstoffe können z. B. faserige Materialien (Natur- oder Synthesefasern), Kieselsäure, Talk, Kreide, Ruß, Gummimehl oder Ähnliches eingesetzt werden.

Die Herstellung des erfindungsgemäßen Abdichtmittels kann z. B. in der Art erfolgen, dass in einem Rührkessel der Guayule-Latex vorgelegt wird und die restlichen Bestandteile, die z. B. als Dispersion/Emulsion in Wasser vorliegen, unter Rühren zugegeben werden.

Das Abdichtmittel kann zum Abdichten von aufblasbaren oder aufpumpbaren Gegenständen, wie z. B. Bällen, eingesetzt werden. Besonders bevorzugt ist allerdings der Einsatz des Abdichtmittels zum nachträglichen Abdichten von Fahrzeugluftreifen, wobei es im Schadensfall durch das Ventil des Fahrzeugluftreifen über aus dem Stand der Technik bekannte Vorrichtungen (s. z. B. WO 02066236 A1) in das Reifeninnere befördert wird.

Anhand des folgenden Ausführungsbeispiels soll die Erfindung näher erläutert werden.

Es wurde das folgende Abdichtmittel hergestellt:
- 48 Gew.-% eines Guayule-Latex mit einem Festgehalt von ca. 60 Gew.-% (Yulex Natural Rubber Latex™, Yulex Corporation, USA)
- 20 Gew.-% einer wässrigen Kolophoniumester-Dispersion mit einem Feststoffgehalt von 50 Gew.-% (Eastman Chemical, Niederlande)
- 32 Gew.-% Ethylenglykol.

Mit diesem Abdichtmittel können Fahrzeugluftreifen nach Schäden sicher abgedichtet werden. Das Abdichtmittel weist durch die Verwendung von Guayule-Latex kein allergenes Potenzial auf und muss daher aufgrund des Latex nicht speziell gekennzeichnet werden.

## Patentansprüche

1. Mittel zum provisorischen Abdichten von aufblasbaren oder aufpumpbaren Gegenständen, insbesondere von Fahrzeugluftreifen, enthaltend zumindest einen Kautschuklatex, **dadurch gekennzeichnet, dass** es als Kautschuklatex Guayule-Latex enthält.

2. Mittel nach Anspruch 1, **dadurch gekennzeichnet, dass** der Guayule-Latex einen Feststoffanteil von 50 bis 75 Gew.-% aufweist und bei der Herstellung des Mittels in einer Menge von 1 bis 90 Gew.-%, bezogen auf das Gesamtgewicht des Mittels zum Abdichten, eingesetzt wird.

3. Mittel nach Anspruch 1 oder 2, **dadurch gekennzeichnet, dass** es zumindest ein Klebharz enthält.

4. Mittel nach Anspruch 3, **dadurch gekennzeichnet, dass** das oder die Klebharz(e) bei der Herstellung des Mittels als 45 bis 60 Gew.-%ige, wässrige Dispersion in einer Menge von 1 bis 50 Gew.-%, bezogen auf das Gesamtgewicht des Mittels zum Abdichten, eingesetzt wird bzw. werden.

5. Mittel nach Anspruch 3 oder 4, **dadurch gekennzeichnet, dass** das oder die Klebharz(e) ausgewählt ist bzw. sind aus der Gruppe bestehend aus Kolophoniumharzen und deren Estern, Terpen-Phenol-Harzen, Alkin-Phenol-Harzen, Phenol-Harzen und Cumaron-Inden-Harzen.

6. Mittel nach zumindest einem der vorhergehenden Ansprüche, **dadurch gekennzeichnet, dass** es zumindest ein Gefrierschutzmittel enthält.

7. Mittel nach Anspruch 6, **dadurch gekennzeichnet, dass** der Anteil an Gefrierschutzmittel, bezogen auf das Gesamtgewicht des Mittels zum Abdichten, 1 bis 40 Gew.-% beträgt.

8. Mittel nach Anspruch 6 oder 7, **dadurch gekennzeichnet, dass** das oder die Gefrierschutzmittel ausgewählt ist bzw. sind aus der Gruppe bestehend aus Ethylenglykol, Propylenglykol und Dipropylenglykol.

## Claims

1. Composition for the provisional sealing of articles which can be pumped up or inflated, more particularly of pneumatic vehicle tyres, comprising at least one rubber latex, **characterized in that** the composition comprises, as rubber latex, guayule latex.

2. Composition according to Claim 1, **characterized in that** the guayule latex has a solids fraction of 50% to 75% by weight and in the preparation of the composition is used in an amount of 1% to 90% by weight, based on the total weight of the composition for sealing.

3. Composition according to Claim 1 or 2, **characterized in that** it comprises at least one tackifier resin.

4. Composition according to Claim 3, **characterized in that** the tackifier resin or resins is or are used in preparing the composition as an aqueous, 45% to 60% by weight dispersion in an amount of 1% to 50% by weight, based on the total weight of the composition for sealing.

5. Composition according to Claim 3 or 4, **characterized in that** the tackifier resin or resins is or are selected from the group consisting of rosins and esters thereof, terpene-phenolic resins, alkyne-phenolic resins, phenolic resins and coumarone-indene resins.

6. Composition according to at least one of the preceding claims, **characterized in that** it comprises at least one antifreeze agent.

7. Composition according to Claim 6, **characterized in that** the fraction of antifreeze agent, based on the total weight of the composition for sealing, is 1% to 40% by weight.

8. Composition according to Claim 6 or 7, **characterized in that** the antifreeze agent or agents is or are selected from the group consisting of ethylene glycol, propylene glycol and dipropylene glycol.

## Revendications

1. Agent pour l'étanchéification provisoire d'articles gonflables ou pompables, notamment de pneus automobiles, contenant au moins un latex de caoutchouc, **caractérisé en ce qu'**il contient un latex de guayule en tant que latex de caoutchouc.

2. Agent selon la revendication 1, **caractérisé en ce que** le latex de guayule présente une proportion de solides de 50 à 75% en poids et est utilisé lors de la fabrication de l'agent en une quantité de 1 à 90% en poids, par rapport au poids total de l'agent d'étanchéification.

3. Agent selon la revendication 1 ou 2, **caractérisé en ce qu'**il contient au moins une résine adhésive.

4. Agent selon la revendication 3, **caractérisé en ce que** la ou les résines adhésives sont utilisées lors de la fabrication de l'agent sous la forme d'une dispersion aqueuse à 45 à 60% en poids en une quantité de 1 à 50% en poids, par rapport au poids total de l'agent d'étanchéification.

5. Agent selon la revendication 3 ou 4, **caractérisé en ce que** la ou les résines adhésives sont choisies dans le groupe constitué par les résines de colophane et leurs esters, les résines de terpène-phénol, les résines d'alcyne-phénol, les résines de phénol et les résine de coumarone-indène.

6. Agent selon au moins l'une quelconque des revendications précédentes, **caractérisé en ce qu'**il contient au moins un agent antigel.

7. Agent selon la revendication 6, **caractérisé en ce que** la proportion d'agent antigel, par rapport au poids total de l'agent d'étanchéification, est de 1 à 40% en poids.

8. Agent selon la revendication 6 ou 7, **caractérisé en ce que** le ou les agents antigels sont choisis dans le groupe constitué par l'éthylène glycol, le propylène glycol et le dipropylène glycol.
